# EUROPEAN PATENT APPLICATION

(11) **EP 4 575 051 A1**
(43) Date of publication of application: **25.06.2025**
(21) Application number: 24219800.0
(22) Date of filing: 13.12.2024
(51) Int. Cl.: D01D 5/088, D01D 5/247, D04H 3/07, D04H 3/11, D04H 3/16, B29C 48/05, B29C 48/345

(54) **TOOL WITH INTEGRATED FLUID LINES TO FORM A CUSHION ASSEMBLY**

(30) Priority: 20.12.2023 US 202318390516; 30.07.2024 DK PA202470199
(71) Applicant: Lear Corporation, Southfield, MI 48033 (US)
(72) Inventor: Hallock, Joshua, Warren, MI 48088 (US); Karges, Mark, Macomb, MI 48044 (US)
(74) Representative: Grünecker Patent- und Rechtsanwälte PartG mbB

(57) **Abstract**

A product is provided with a body with a nonrectangular cross section with a mesh of strands of expanded thermoplastic resin. A density of the mesh of strands about a perimeter of the nonrectangular cross section is greater than within the perimeter. The perimeter is provided with at least one recess formed therein.

## Description

### CROSS-REFERENCE TO RELATED APPLICATIONS

This application claims priority to U.S. application Serial No. 18/390,516 filed December 20, 2023 and to Denmark application No. PA202470199 filed July 30, 2024, the disclosures of which are hereby incorporated in their entirety by reference herein.

### TECHNICAL FIELD

Various embodiments are related to cushion assemblies for seating assemblies.

### BRIEF DESCRIPTION OF THE DRAWINGS

FIGURE 1 is a front perspective view of a seat assembly according to an embodiment;
FIGURE 2 is a front partial perspective view of a cushioning pad of the seat assembly of Figure 1, according to an embodiment;
FIGURE 3 is a front elevation schematic view of a system to manufacture the seat cushioning pad of Figure 2, according to an embodiment;
FIGURE 4 is a front elevation view of a cushioning pad according to an embodiment;
FIGURE 5 is an enlarged front perspective view of a tooling plate of the system of Figure 3, according to an embodiment;
FIGURE 6 is a top partial section view of the tooling plate of Figure 5;
FIGURE 7 is a partial cross-section perspective view of the tooling plate of Figure 5; and
FIGURE 8 is an enlarged front perspective view of the system of Figure 3; and
FIGURE 9 is an enlarged front perspective view of a tooling plate of the system of Figure 3, according to another embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.*, in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first surface could be termed a second surface, and, similarly, a second surface could be termed a first surface, without departing from the scope of the various described embodiments. The first surface and the second surface are both surfaces, but they are not the same surface.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

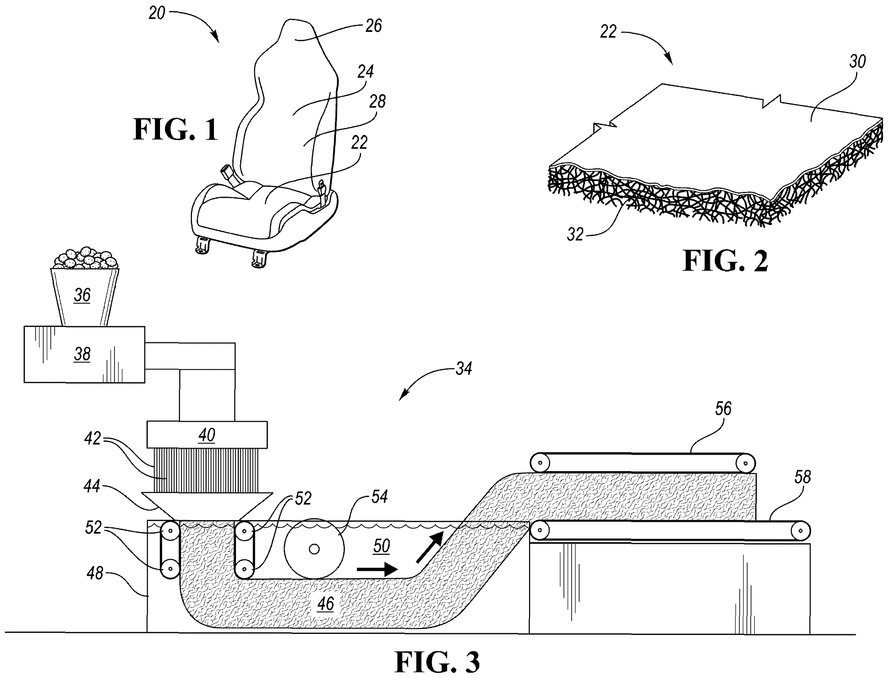

Figure 1 illustrates a seat assembly 20 as a vehicle seat assembly 20 according to an embodiment. Although the vehicle seat assembly 20 is illustrated and described, any seat assembly 20 may be employed. The seat assembly 20 may be utilized in a land vehicle, aircraft, watercraft, or the like. The seat assembly 20 may also be utilized as an office chair, comfort chair, or the like.

The seat assembly 20 includes a seat bottom cushion 22 to support a pelvis and thighs of a seated occupant. The seat assembly 20 also includes a seat back cushion 24 to support a back and shoulders of the seated occupant. The seat assembly 20 also includes a head restraint 26 to support a neck and head of the seated occupant. A trim cover 28 is provided over the seat cushions 22, 24 and the head restraint 26, to conceal the cushions 22, 24 and head restraint 26, and provide a uniform and smooth contact surface for the occupant.

Referring to Figure 2, a product is shown. In the illustrated embodiment, the product is the seat cushion 22, shown disassembled from the seat assembly 20. The cushion 22 is provided with a body 30. According to an embodiment, the cushion 22 may be provided with a nonrectangular cross section. The body 30 is composed of a mesh of strands 32 of expanded thermoplastic resin. The mesh of strands 32 is provided with three-dimensional filament loops extruded of a thermoplastic polymer. The thermoplastic polymer is composed of a component selected from the group consisting of polyolefins, polystyrene-based thermoplastic elastomers, polyester-based thermoplastic elastomers, polyurethane-based thermoplastic elastomers, and polyamide-based thermoplastic elastomers.

Referring now to Figure 3, the seat cushions 22, 24 are manufactured from a system 34 and a process of extruded thermoplastic resin mesh. A hopper 36 holds material stock that is to be extruded, e.g., as solid granules or pellets of the material. The material may be provided by plastic, such as a linear low-density polyethylene (LLDPE). The material is fed from the hopper 36 to an extruder 38.

The extruder 38 melts and transports the material to a die plate 40. In one non-limiting example, the extruder 38 includes a barrel that receives a rotatable screw or auger, as well as heating elements. Rotation of the screw forces the material to move through the barrel and helps heat the material due to the friction generated as the screw rotates. The material exits the extruder 38 under pressure and in a molten state.

The die plate 40 extrudes the material into filaments 42. The die plate 40 may be provided as described below depending on the direction of the extrusion relative to the final member 22, 24 produced from it. More specifically, the die plate 40 has multiple small circular, through holes or apertures through which the molten material passes. A single filament 42 is extruded from each die plate hole. The filaments 42 fall downward from the die plate under system pressure and the force of gravity to a funnel 44 as described below. The funnel 44 may have a cross-sectional shape that is the same as, or is different than, a shape collectively defined by the apertures in the die plate 40.

The funnel 44 helps consolidate or group the filaments 42 into a more compact arrangement in which the filaments 42 bend or loop and each filament 42 contacts and bonds to at least one other filament 42. The funnel 44 has a funnel inlet and a funnel outlet that is smaller than the funnel inlet. The funnel 44 is narrower at the funnel outlet than at the funnel inlet. Individual separated filaments 42 enter the funnel inlet, the filaments 42 bend/loop and move into contact as they accumulate and slide down the funnel 44 toward the funnel outlet, and the consolidated filament structure 46 exits the funnel outlet and immediately enters a water tank.

A liquid tank 48 holds water 50, coolant, or another fluid, and receives the consolidated filament structure 46 from the funnel 44. The liquid 50 in the bath 48 helps temporarily support the consolidated filament structure 46 to prevent the filament structure from collapsing or condensing into a less open or less porous arrangement and helps maintain the desired porosity and density. As such, the liquid 50 provides some resistance that causes additional bending and looping of the filaments 42 to further build the consolidated filament structure 46. Second, the liquid 50 cools the filaments 42 from the outside to solidify the filaments 42 and prevent the filaments 42 from bonding at additional locations.

The tank 48 includes various rollers and conveyors that help move the consolidated filament structure 46 through the liquid 50 and out of the liquid 50, such as a tractor conveyor 52. The rollers and conveyors speed may be controlled to move the consolidated filament structure 46 away from the funnel 44 at a speed that is dependent on the speed that the consolidated filament structure 46 exits the funnel 44.

Other rollers, such as roller 54 helps keep the consolidated filament structure 46 submerged in the liquid 50 and guides the consolidated filament structure 46 through the liquid 50 toward a conveyor belt 56 and shaker table 58 that are disposed outside of the tank 48. The shaker table 58 shakes the consolidated filament structure 46 while it is on the conveyor belt 56 to remove liquid 50. Pressurized air may additionally or alternatively be blown toward the consolidated filament structure 46, and/or the consolidated filament structure 46 may be squeezed to remove liquid 50. The consolidated filament structure 46 may then be cut to a desired size and shape.

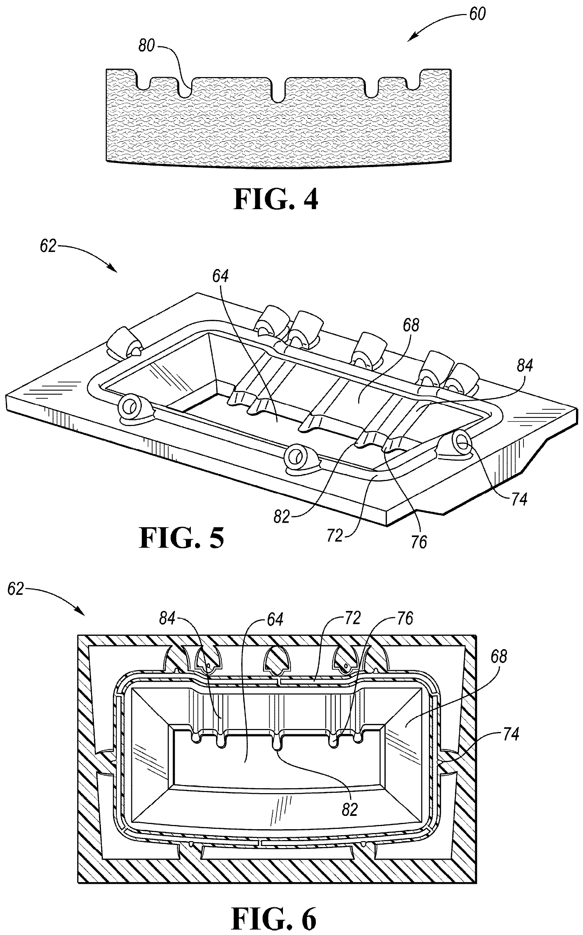

Figure 4 illustrates a cushioning pad 60 formed by the system 34 of Figure 3. The cushioning pad 60 is extruded from the system 34 and then cut from the filament structure 46 The cushioning pad 60 includes the body 30 that is formed from the mesh of strands 32. The body 30 is provided with a density of the mesh of strands 32 about a perimeter of the nonrectangular cross section. The density of the mesh of strands 32 about the perimeter is comprised of a plurality of rows of strands. The density of the mesh of strands 32 is greater around the perimeter than within the perimeter of the body 30 to provide a contact surface about the perimeter. The perimeter also includes at least one recess 80, shown in the illustrated embodiment. The recesses 80 may be utilized as trenches for receiving other components of the seat assembly 20, such as a seat frame, ducting, wiring, or the like.

The cushioning pad 60 has a cross-section illustrated in Figure 4. The cross-section is nonrectangular so that the cushioning pad 60 is extruded with the shape of the desired cushioning pad 60, to avoid or minimize secondary shipping processes and material scrap. The cushioning pad 60 may be a seat cushion, or may be a portion of a seat cushion, that is assembled with other seat cushion portions. The cushioning pad 60 may be utilized in any padding application, such as seat cushions, backrests, head restraints, armrests, leg rests, and the like.

Figures 5-8 illustrate a tool 62 that is provided in the funnel 44 of the system 34 of Figure 3. The tool 62 is provided with an aperture 64 sized to match an overall cross section of the cushion 22. The tool 62 is provided with a nonrectangular cross section to match an overall nonrectangular cross section of the cushion 22. The tool 62 may be three-dimensionally printed according to an embodiment. The tool 62 may be composed of a polymeric material according to an embodiment. Alternatively, the tool may be formed from aluminum, stainless steel, or any suitable metal or alloy.

The tool 62 is utilized in a process to create the cushion 22. The process first consists of an outer plurality of strands 66 of molten thermoplastic resin being dispensed through the aperture 64 of the tool 62, engaging a leading edge 68 of the tool 62. The leading edge 68 is illustrated as an angled chamber of the tool 62. Meanwhile, an inner plurality of strands 70 of molten thermoplastic resin is dispensed through the aperture 64 of the tool 62, without engaging the leading edge 68 of the tool 62. Fluid, such as water, is then dispensed through a fluid line 72 through the tool 62 to cool the tool and the plurality of strands 66, 70 as a solidified mesh. The fluid is dispensed through the fluid line 72 to cool the tool 62, and consequently the strands 70. The fluid also engages the leading edge 68 before being dispensed to the aperture 64 of the tool 62.

The tool 62 includes a plurality of projections 82 that extend within the aperture 64 to form the recesses 80. The tool 62 may also include a plurality of leading edges 84 that are angled at a steeper incline than the leading edge 68 to cooperate with the forming of the recesses 80.

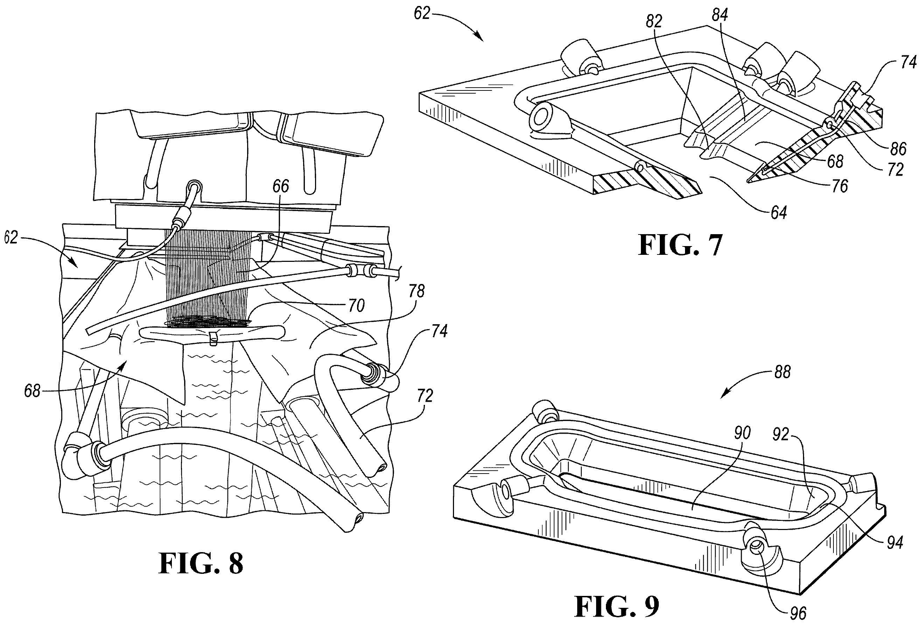

The fluid line 72 surrounds the perimeter of the leading edge 68 and branches towards the aperture 64 of the tool 62. The fluid line 72 is formed in a continuous loop for even fluid distribution. The fluid line 72 connects to a plurality of inlets 74 formed around the tool 62 to provide water to the fluid line 72. The inlets 74 also connect to a plurality of outlets 76 to distribute fluids through the aperture 64. The outlets 76 are formed through the projections 82 to distribute the fluid to the recesses 80 in the cushion 60. As illustrated in Figure 7, additional fluid lines 86 are provided in the tool 62 to convey fluid to the outlets 76.

The leading edge 68 may be lubricated by the fluid prior to dispensing the outer plurality of strands 66 of molten thermoplastic resin. The leading edge 68 may also be lubricated during the dispensing of the outer plurality of strands 66 of molten thermoplastic resin. The leading edge 68 is further provided with a fabric 78 displaced along the leading edge 68, shown in Figure 8. The fabric 78 may also be lubricated prior to or during the dispensing of the outer plurality of strands 66.

Figure 9 illustrates a tool 88 that is provided in the funnel 44 of the system 34 of Figure 3, according to another embodiment. The tool 88 is provided with an aperture 90 sized to match an overall cross section of the cushion 22. The tool 88 is provided with a nonrectangular cross section to match an overall nonrectangular cross section of the cushion 22. The tool 88 may be three-dimensionally printed according to an embodiment. The tool 88 may be composed of a polymeric material according to an embodiment.

The tool 88 is utilized in a process to create the cushion 22. The process first consists of an outer plurality of strands 66 of molten thermoplastic resin being dispensed through the aperture 90 of the tool 88, engaging a leading edge 92 of the tool 88. The leading edge 92 is illustrated as an angled chamber of the tool 88. Meanwhile, an inner plurality of strands 70 of molten thermoplastic resin is dispensed through the aperture 90 of the tool 88, without engaging the leading edge 92 of the tool 88. Fluid, such as water, is then dispensed through a fluid line 94 through the tool 88 to cool the tool and the plurality of strands 66, 70 as a solidified mesh. The fluid is dispensed through the fluid line 94 to cool the tool 88, and consequently the strands 70. The fluid also engages the leading edge 92 before being dispensed to the aperture 90 of the tool 88.

The fluid line 94 surrounds the perimeter of the leading edge 92 and branches towards the aperture 90 of the tool 88. The fluid line 94 is formed in a continuous loop for even fluid distribution. The fluid line 94 connects to a plurality of inlets 96 formed around the tool 88 to provide water to the fluid line 94. The inlets 96 may also connect to a plurality of outlets to distribute fluids through the aperture 90. The leading edge 92 may be lubricated by the fluid prior to dispensing the outer plurality of strands 66 of molten thermoplastic resin. The leading edge 92 may also be lubricated during the dispensing of the outer plurality of strands 66 of molten thermoplastic resin.

In at least one first clause, which may or may not be in combination with any of the following clauses, a product is provided with a body with a nonrectangular cross section provided from a mesh of strands of expanded thermoplastic resin. A density of the mesh of strands about a perimeter of the nonrectangular cross section is greater than within the perimeter. The perimeter includes at least one recess formed therein.

According to a second clause, the product of any of the preceding or following clauses is provided, wherein the density of the mesh of strands about the perimeter of the nonrectangular cross section comprises as a plurality of rows of strands.

According to a third clause, a seat assembly is provided with a seat frame and a cushioning pad. The body of any of the preceding or following clauses is sized to provide the cushioning pad.

In a fourth clause, a method of manufacturing a product, which may or may not be in combination with any of the preceding or following clauses, dispenses, through a tool with an aperture sized to match an overall cross section of the product, a plurality of strands of a molten thermoplastic resin. A leading edge of the tool engages with an outer plurality of strands of the molten thermoplastic resin. The plurality of strands of the molten thermoplastic resin is passed through the aperture. An inner plurality of strands of the molten thermoplastic resin is passed through the aperture spaced inward of the leading edge. Fluid is dispensed through a fluid line formed through the tool.

According to a fifth clause, the method of any of the preceding or following clauses is provided, wherein the tool has a nonrectangular cross section matching an overall nonrectangular cross section of the product.

According to a sixth clause, the method of any of the preceding or following clauses is provided with dispensing fluid from the fluid line into the aperture of the tool.

According to a seventh clause, the method of any of the preceding or following clauses is provided with dispensing fluid from the fluid line along the leading edge.

According to an eighth clause, the method of any of the preceding or following clauses is provided with lubricating the leading edge prior to the dispensing of the molten thermoplastic resin.

According to a ninth clause, the method of any of the preceding or following clauses is provided with lubricating a fabric displaced along the leading edge prior to, and the dispensing of the molten thermoplastic resin.

According to a tenth clause, a product is provided and formed from the method of any of the preceding or following clauses.

According to an eleventh clause, the product of any of the preceding or following clauses is further provided with a seat cushioning pad.

According to a twelfth clause, the method of any of the preceding or following clauses is provided with installing the product as a cushioning pad to a seat assembly.

According to a thirteenth clause, a seat assembly is manufactured according to the method of any of the preceding or following clauses.

According to a fourteenth clause, the method of any of the preceding or following clauses is provided with a step of machining a body of the tool from a stock material.

According to a fifteenth clause, the method of any of the preceding or following clauses is provided with three-dimensional printing the tool.

In a sixteenth clause, a tool, which may or may not be in combination with any of the preceding or following clauses, is provided with a tool body with a through aperture and a leading edge about the aperture, the through aperture sized to match an overall perimeter of a product, the leading edge and the through aperture sized to receive a molten thermoplastic resin as a plurality of dispensed strands, wherein the tool through aperture is sized to maintain the plurality of dispensed strands within the overall perimeter of the product, and wherein a fluid line is formed through the tool to cool the tool and the plurality of strands.

In a seventeenth clause, the tool of any of the preceding or following clauses is provided, wherein the tool through aperture is nonrectangular with a nonrectangular cross section.

In an eighteenth clause, the tool of any of the preceding or following clauses is provided with a plate.

In a nineteenth clause, the tool of any of the preceding or following clauses is provided with fluid fittings around the perimeter.

In a twentieth clause, the tool of any of the preceding or following clauses is provided with valves.

In a twenty-first clause, the tool of any of the preceding or following clauses is provided with a fabric installed on the tool.

In a twenty-second clause, the tool of any of the preceding or following clauses is provided, wherein the tool is formed of a polymeric material.

In a twenty-third clause, the tool of any of the preceding or following clauses is provided, wherein the tool is three-dimensionally printed.

In a twenty-fourth clause, the tool of any of the preceding or following clauses is provided, wherein the fluid line surrounds a perimeter of the leading edge.

In a twenty-fifth clause, the tool of any of the preceding or following clauses is provided, wherein the fluid line branches toward the aperture of the tool.

In a twenty-sixth clause, the tool of any of the preceding or following clauses is provided, wherein the fluid line is formed in a continuous loop for even water distribution.

In a twenty-seventh clause, the tool of any of the preceding or following clauses is provided with a plurality of inlets to provide water to the fluid line.

In a twenty-eighth clause, the tool of any of the preceding clauses is provided with a plurality of outlets to filter fluids through the aperture.

While various embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A product comprising:
a body with a nonrectangular cross section comprising a mesh of strands of expanded thermoplastic resin;
wherein a density of the mesh of strands about a perimeter of the nonrectangular cross section is greater than within the perimeter, and wherein the perimeter includes at least one recess formed therein.

2. The product of claim 1, wherein the density of the mesh of strands about the perimeter of the nonrectangular cross section comprises as a plurality of rows of strands.

3. A seat assembly comprising:
a seat frame;
a body with a nonrectangular cross section comprising a mesh of strands of expanded thermoplastic resin;
wherein a density of the mesh of strands about a perimeter of the nonrectangular cross section is greater than within the perimeter, and wherein the perimeter includes at least one recess formed therein; and
a cushioning pad, wherein the body is sized to provide the cushioning pad.

4. A method of manufacturing a product, comprising:
dispensing, through a tool with an aperture sized to match an overall cross section of the product, a plurality of strands of a molten thermoplastic resin;
engaging a leading edge of the tool with an outer plurality of strands of the molten thermoplastic resin;
passing the plurality of strands of the molten thermoplastic resin, through the aperture;
passing an inner plurality of strands of the molten thermoplastic resin through the aperture spaced inward of the leading edge; and
dispensing fluid through a fluid line formed through the tool.

5. The method of claim 4, wherein the tool has a nonrectangular cross section matching an overall nonrectangular cross section of the product.

6. The method of claim 4 or 5, further comprising:
dispensing fluid from the fluid line into the aperture of the tool,
and/or dispensing fluid from the fluid line along the leading edge.

7. The method of any of claims 4 to 6, further comprising:
lubricating the leading edge prior to the dispensing of the molten thermoplastic resin,
and/or lubricating a fabric displaced along the leading edge prior to, and the dispensing of the molten thermoplastic resin.

8. A product formed from the method of any of claims 4 to 7.

9. The product of claim 8, further comprising a seat cushioning pad.

10. The method of any of claims 4 to 7, further comprising:
installing the product as a cushioning pad to a seat assembly.

11. A seat assembly manufactured according to the method of claim 10.

12. The method of any of claims 4 to 7, further comprising a step of machining a body of the tool from a stock material,
and/or the method further comprising three-dimensional printing the tool.

13. A tool comprising a tool body with a through aperture and a leading edge about the aperture, the through aperture sized to match an overall perimeter of a product, the leading edge and the through aperture sized to receive a molten thermoplastic resin as a plurality of dispensed strands, wherein the tool through aperture is sized to maintain the plurality of dispensed strands within the overall perimeter of the product, and wherein a fluid line is formed through the tool to cool the tool and the plurality of strands.

14. The tool of claim 13, wherein the tool through aperture is nonrectangular with a nonrectangular cross section.

15. The tool of claim 13 or 14, wherein the tool body further comprises a plate,
and/or wherein the tool further comprises fluid fittings around the perimeter.
